# EUROPEAN PATENT SPECIFICATION

(11) **EP 2 814 802 B1**
(45) Date of publication and mention of the grant of the patent: **16.12.2020**
(21) Application number: 13749272.4
(22) Date of filing: 07.02.2013
(51) Int. Cl.: C07C 39/12, C07C 39/23, C08L 63/00, C08G 59/16

(54) **MIXTURE OF BENZOXAZINE, EPOXY AND ANHYDRIDE**
MISCHUNG VON BENZOXAZIN, EPOXID UND ANHYDRID
MÉLANGE DE BENZOXAZINE, D'ÉPOXY ET D'ANHYDRIDE

(30) Priority: 17.02.2012 US 201261600032 P
(43) Date of publication of application: 24.12.2014
(73) Proprietor: Huntsman Advanced Materials Americas LLC, The Woodlands, TX 77380 (US)
(72) Inventor: WANG, Dong, The Woodlands, TX 77382 (US); KINCAID, Derek, Spring, TX 77379 (US); KUANG, Wenfeng, The Woodlands, TX 77382 (US); SUBRAHMANIAN, K. P., The Woodlands, TX 77382 (US); ARGUELLES, Leo, Spring, TX 77386 (US)
(74) Representative: Weidner Stern Jeschke
(86) International application number: PCT/US2013/025008
(87) International publication number: WO 2013/122800

(56) References cited:
- WO-A1-98/31750
- WO-A1-2011/041625
- WO-A1-2011/109463
- CN-A- 102 153 837
- JP-A- 2011 198 844
- US-A- 3 873 493
- US-A- 4 391 965
- US-A1- 2004 181 013
- US-A1- 2006 025 509
- US-A1- 2006 173 101
- US-A1- 2007 129 509
- US-A1- 2011 313 080

## Description

### FIELD OF INVENTION

This disclosure relates to a phenolic-free composition containing a benzoxazine, epoxy resin and acid anhydride. The phenolic-free composition is useful in a variety of applications, such as, in an adhesive, sealant, coating, structural composite or encapsulating system for electronic and electrical components.

### BACKGROUND OF THE INVENTION

Polymers derived from the ring opening polymerization of benzoxazines compete with phenolic, epoxy and other thermoset or thermoplastic resins in various applications, such as in prepregs, laminates, PWB's, molding compounds, sealants, sinter powders, cast articles, structural composites and electrical components. The benzoxazines, which are synthesized by reacting a phenol with an amine and an aldehyde in the presence or absence of a solvent, have been shown to be, upon curing, dimensionally stable with good electrical and mechanical resistance, low shrinkage, low water absorption, and medium to high glass transition temperatures.

Benzoxazines have also been combined with various epoxy resins to produce curable compositions (*see for e.g.* U.S, Pat. Nos. 4,607,091 (Schreiber), 5,021,484 (Schreiber), 5,200,452 (Schreiber) and 5,443,911 (Schreiber)). Because the epoxy resin reduces the melt viscosity of the benzoxazine, these blends have been shown to be useful in electrical applications since the blend is able to handle higher filler loadings yet still maintain a processable viscosity. However, one drawback to the use of such blends is that higher curing temperatures are usually necessary because of the addition of the epoxy. Furthermore, although these blends exhibit high glass transition temperatures after curing, toughness and stiffness are usually sacrificed to some degree.

More recently, blends of benzoxazines and a dianhydride have been tried (*see* C. Jubsilp et al., "Property Enhancement of Polybenzoxazine Modified with Dianhydride", Polymer Degradation and Stability, 96, 1047-1053 (2011)). These blends are solvent-based due to the high melting point and poor processability of the particular dianhydride used, 3,3',4,4'-benzophenonetetracarboxylic dianhydride. These blends are therefore less desirable due to the creation of voids caused by solvent escape, the environmental impact of vaporized solvent, and the redeposition of outgassed molecules on the surface of the cured article.

In U.S. Pat. No. 6,207,786, ternary blends of benzoxazines, epoxy resins, and phenolic resins are disclosed. However, it's been found the addition of phenolic resins to the blend often lowers crosslink density during curing leading to cured articles having lower than desired glass transition temperatures.

US 2006/0025509 A1 is related to specific benzoxazine compounds that can be cured with epoxies and fluxing agents to afford thermoset materials with particular utility as a no-flow underfilling encapsulants within the semi-conductor packaging industry.

CN 102153837 A is related to a benzoxazine modified epoxy resin composition including benzoxazine resin, epoxy resin, acid anhydride curing agent and imidazole accelerator.

JP 2011198844 A is directed to an adhesive film for joining electronic components comprising an epoxy compound, a reactive polymer compound having a functional group capable of reacting with the epoxy compound, an acid anhydride-based curing agent and a benzoxazine compound.

WO 2011/109463 A1 is related to a thermosetting resin composition including a benzoxazine component comprising two or more benzoxazine monomer compounds and at least one epoxy resin.

US 4,391,965 is directed to a modified polycarboxylic acid polyanhydride curing agent suitable for curing epoxy resins which is prepared by reacting a polycarboxylic acid anhydride with a monohydroxy compound.

Notwithstanding the state of the technology, it is an object of the present disclosure to provide an improved benzoxazine-based composition which, upon cure, is able to perform thermally, mechanically and physically at high temperatures for long periods of time, therefore making it useful in high temperature applications within various industries, such as the aerospace, electronic and automotive industries.

### SUMMARY OF THE INVENTION

The present disclosure provides a phenolic-free composition that includes a benzoxazine, epoxy resin and acid anhydride according to claim 1.

The phenolic-free composition according to the present disclosure may be used in a variety of applications such as in a coating, adhesive, sealant, or structural composite for use in various industries, such as in the aerospace, electronic or automotive industries.

### DETAILED DESCRIPTION OF THE INVENTION

If appearing herein, the term "comprising" and derivatives thereof are not intended to exclude the presence of any additional component, step or procedure, whether or not the same is disclosed herein. In order to avoid any doubt, all compositions claimed herein through use of the term "comprising" may include any additional additive, adjuvant, or compound, unless stated to the contrary. In contrast, the term, "consisting essentially of" if appearing herein, excludes from the scope of any succeeding recitation any other component, step or procedure, excepting those that are not essential to operability and the term "consisting of", if used, excludes any component, step or procedure not specifically delineated or listed. The term "or", unless stated otherwise, refers to the listed members individually as well as in any combination.

The articles "a" and "an" are used herein to refer to one or to more than one (i.e. to at least one) of the grammatical object of the article. By way of example, "a benzoxazine" means one benzoxazine or more than one benzoxazine. The phrases "in one embodiment," "according to one embodiment," and the like generally mean the particular feature, structure, or characteristic following the phrase is included in at least one embodiment of the present invention, and may be included in more than one embodiment of the present disclosure. Importantly, such phases do not necessarily refer to the same embodiment. If the specification states a component or feature "may", "can", "could", or "might" be included or have a characteristic, that particular component or feature is not required to be included or have the characteristic.

It shall also be understood that the expression "ambient temperature" if used herein is to mean the temperature of the surrounding work environment (e.g. the temperature of the area, building or room where the curable composition is used), exclusive of any temperature changes that occur as a result of the direct application of heat to the curable composition to facilitate curing. The ambient temperature is typically between about 10° C and about 30° C.

Also as used herein, "phenolic-free" is meant to say that no phenolic resin or phenolic compound is present in the composition except for trace amounts which may be present as impurities in any of the composition components. According to the present disclosure any such impurities are less than 1% by weight, more preferably less than 0.5% by weight and most preferably less than 0.01% by weight relative to the total weight of phenolic-free composition.

According to the present disclosure, the phenolic-free composition contains a benzoxazine. The benzoxazine, which imparts mechanical strength, low water absorption and thermal curability to the composition, may be any curable monomer, oligomer or polymer containing at least one benzoxazine moiety.

Thus, in one embodiment, the benzoxazine may be represented by the general formula 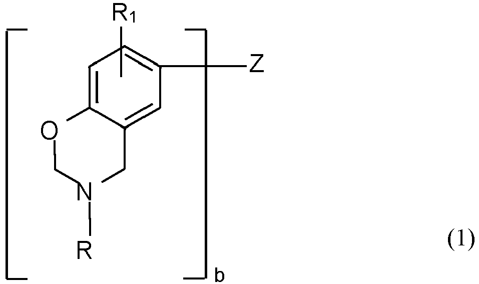 where b is an integer from 1 to 4; each R is independently hydrogen, a substituted or unsubstituted C₁ - C₂₀ alkyl group, a substituted or unsubstituted C₂ - C₂₀ alkenyl group, a substituted or unsubstituted C₆ - C₂₀ aryl group, a substituted or unsubstituted C₂ - C₂₀ heteroaryl group, a substituted or unsubstituted C₄ - C₂₀ carbocyclic group, a substituted or unsubstituted C₂ - C₂₀ heterocyclic group, or a C₃-C₈ cycloalkyl group; each R₁ is independently hydrogen, a C₁ - C₂₀ alkyl group, a C₂ - C₂₀ alkenyl group, or a C₆ - C₂₀ aryl group; and Z is a direct bond (when b=2), a substituted or unsubstituted C₁ - C₂₀ alkyl group, a substituted or unsubstituted C₆ - C₂₀ aryl group, a substituted or unsubstituted C₂ - C₂₀ heteroaryl group, O, S, S=O, O=S=O or C=O. Substituents include, but are not limited to, hydroxy , C₁ - C₂₀ alkyl, a C₂ - C₁₀ alkoxy, mercapto, C₃ - C₈ cycloalkyl, C₆ - C₁₄ heterocyclic, C₆ - C₁₄ aryl, C₆ - C₁₄ heteroaryl, halogen, cyano, nitro, nitrone, amino, amido, acyl, oxyacyl, carboxyl, carbamate, sulfonyl, sulfonamide, and sulfuryl.

In one particular embodiment within formula (1), the benzoxazine may be represented by the following formula: 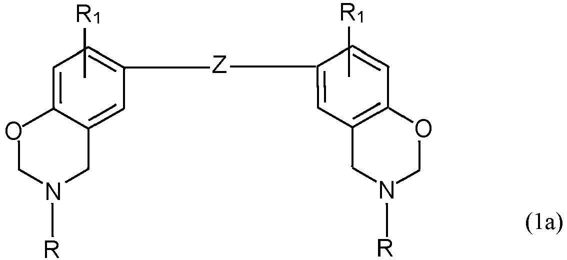 where Z is selected from a direct bond, CH₂, C(CH₃)₂, C=O, O, S, S=O, O=S=O and 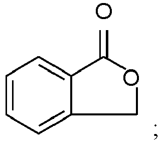 each R is independently hydrogen, a C₁ - C₂₀ alkyl group, an allyl group, or a C₆ - C₁₄ aryl group; and R₁ is defined as above.

In another embodiment, the benzoxazine may be embraced by the following general formula 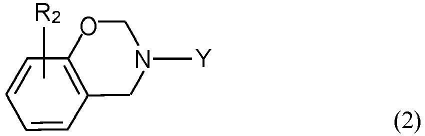 where Y is a C₁ - C₂₀ alkyl group, a C₂ - C₂₀ alkenyl group, or substituted or unsubstituted phenyl; and each R₂ is independently hydrogen, halogen, a C₁ - C₂₀ alkyl group, or a C₂ - C₂₀ alkenyl group. Suitable substituents for phenyl are as set forth above.

In one particular embodiment within formula (2), the benzoxazine may be represented by the following formula 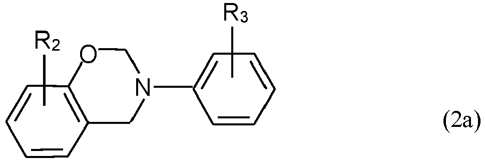 where each R₂ is independently a C₁ - C₂₀ alkyl or C₂ - C₂₀ alkenyl group, each of which being optionally substituted or interrupted by one or more O, N, S, C=O, COO and NHC=O, and a C₆ - C₂₀ aryl group; and each R₃ is independently hydrogen, a C₁ - C₂₀ alkyl or C₂ - C₂₀ alkenyl group, each of which being optionally substituted or interrupted by one or more O, N, S, C=O, COOH and NHC=O or a C₆ - C₂₀ aryl group.

Alternatively, the benzoxazine may be embraced by the following general formula 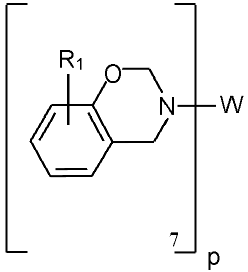 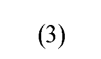 where p is 2, W is selected from biphenyl, diphenyl methane, diphenyl isopropane, diphenyl sulfide, diphenyl sulfoxide, diphenyl sulfone, and diphenyl ketone, and R¹ is defined as above.

In the present disclosure, combinations of multifunctional benzoxazines and monofunctional benzoxazines, or combinations of one or more multifunctional benzoxazines and one or more monofunctional benzoxazines may be used.

The benzoxazines are commercially available from several sources including Huntsman Advanced Materials Americas LLC, Georgia Pacific Resins Inc. and Shikoku Chemicals Corporation.

The benzoxazines may also be obtained by reacting a phenol compound, for example, bisphenol A, bisphenol F or phenolphthalein, with an aldehyde, for example, formaldehyde, and a primary amine, under conditions in which water is removed. The molar ratio of phenol compound to aldehyde reactant may be from about 1:3 to 1:10, alternatively from about 1:4: to 1:7. In still another embodiment, the molar ratio of phenol compound to aldehyde reactant may be from about 1:4.5 to 1:5. The molar ratio of phenol compound to primary amine reactant may be from about 1:1 to 1:3, alternatively from about 1:1.4 to 1:2.5. In still another embodiment, the molar ratio of phenol compound to primary amine reactant may be from about 1:2.1 to 1:2.2.

Examples of primary amines include: aromatic mono- or di-amines, aliphatic amines, cycloaliphatic amines and heterocyclic monoamines; for example, aniline, o-, m- and p-phenylene diamine, benzidine, 4,4'-diaminodiphenyl methane, cyclohexylamine, butylamine, methylamine, hexylamine, allylamine, furfurylamine ethylenediamine, and propylenediamine. The amines may, in their respective carbon part, be substituted by C₁-C₈ alkyl or allyl. In one embodiment, the primary amines is a compound having the general formula RₐNH₂, wherein Rₐ is allyl, unsubstituted or substituted phenyl, unsubstituted or substituted C₁-C₈ alkyl or unsubstituted or substituted C₃-C₈ cycloalkyl. Suitable substituents on the Rₐ group include, but are not limited to, amino, C₁-C₄ alkyl and allyl. In some embodiments, one to four substituents may be present on the Rₐ group. In one particular embodiment, Rₐ is phenyl.

According to one embodiment, the benzoxazine may be included in the phenolic-free composition in an amount in the range of between about 25% to about 75% by weight, based on the total weight of the phenolic-free composition. In embodiments where less shrinkage during curing and higher modulus are desired in the cured article, the benzoxazine may be included in the phenolic-free composition in an amount in the range of between about 10% to about 25% by weight, based on the total weight of the phenolic-free composition.

The phenolic-free composition also contains an epoxy resin. The epoxy resin, which increases crosslink density and lowers the viscosity of the composition, may be any compound having an oxirane ring. In general, any oxirane ring-containing compound is suitable for use as the epoxy resin in the present disclosure, such as the epoxy compounds disclosed in U.S. Pat. No. 5,476,748 which is incorporated herein by reference. The epoxy resin may be solid or liquid. In one embodiment, the epoxy resin is selected from a polyglycidyl epoxy compound; a non-glycidyl epoxy compound; an epoxy cresol novolac compound; an epoxy phenol novolac compound and mixtures thereof.

The polyglycidyl epoxy compound may be a polyglycidyl ether, poly(β-methylglycidyl) ether, polyglycidyl ester or poly(β-methylglycidyl) ester. The synthesis and examples of polyglycidyl ethers, poly(β-methylglycidyl) ethers, polyglycidyl esters and poly(β-methylglycidyl) esters are disclosed in U.S. Pat. No. 5,972,563, which is incorporated herein by reference. For example, ethers may be obtained by reacting a compound having at least one free alcoholic hydroxyl group and/or phenolic hydroxyl group with a suitably substituted epichlorohydrin under alkaline conditions or in the presence of an acidic catalyst followed by alkali treatment. The alcohols may be, for example, acyclic alcohols, such as ethylene glycol, diethylene glycol and higher poly(oxyethylene) glycols, propane-1,2-diol, or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, bistrimethylolpropane, pentaerythritol and sorbitol. Suitable glycidyl ethers may also be obtained, however, from cycloaliphatic alcohols, such as 1,3- or 1,4-dihydroxycyclohexane, bis(4-hydroxycyclohexyl)methane, 2,2-bis(4-hydroxycyclohexyl)propane or 1,1-bis(hydroxymethyl)cyclohex-3-ene, or they may possess aromatic rings, such as N,N-bis(2-hydroxyethyl)aniline or p,p'-bis(2-hydroxyethylamino)diphenylmethane.

Particularly important representatives of polyglycidyl ethers or poly(β-methylglycidyl)ethers are based on monocyclic phenols, for example, on resorcinol or hydroquinone, on polycyclic phenols, for example, on bis(4-hydroxyphenyl)methane (Bisphenol F), 2,2-bis(4-hydroxyphenyl)propane (Bisphenol A), bis(4-hydroxyphenyl)sulfone (Bisphenol S), alkoxylated Bisphenol A, F or S, triol extended Bisphenol A, F or S, brominated Bisphenol A, F or S, hydrogenated Bisphenol A, F or S, glycidyl ethers of phenols and phenols with pendant groups or chains, on condensation products, obtained under acidic conditions, of phenols or cresols with formaldehyde, such as phenol novolaks and cresol novolaks, or on siloxane diglycidyls.

Polyglycidyl esters and poly(P-methylglycidyl)esters may be produced by reacting epichlorohydrin or glycerol dichlorohydrin or β-methylepichlorohydrin with a polycarboxylic acid compound. The reaction is expediently carried out in the presence of bases. The polycarboxylic acid compounds may be, for example, glutaric acid, adipic acid, pimelic acid, suberic acid, azelaic acid, sebacic acid or dimerized or trimerized linoleic acid. Likewise, however, it is also possible to employ cycloaliphatic polycarboxylic acids, for example tetrahydrophthalic acid, 4-methyltetrahydrophthalic acid, hexahydrophthalic acid or 4-methylhexahydrophthalic acid. It is also possible to use aromatic polycarboxylic acids such as, for example, phthalic acid, isophthalic acid, trimellitic acid or pyromellitic acid, or else carboxyl-terminated adducts, for example of trimellitic acid and polyols, for example glycerol or 2,2-bis(4-hydroxycyclohexyl)propane, may be used.

In another embodiment, the epoxy resin is a non-glycidyl epoxy compound. Non-glycidyl epoxy compounds may be linear, branched, or cyclic in structure. For example, there may be included one or more epoxide compounds in which the epoxide groups form part of an alicyclic or heterocyclic ring system. Others include an epoxy-containing compound with at least one epoxycyclohexyl group that is bonded directly or indirectly to a group containing at least one silicon atom. Examples are disclosed in U.S. Pat. No. 5,639,413, which is incorporated herein by reference. Still others include epoxides which contain one or more cyclohexene oxide groups and epoxides which contain one or more cyclopentene oxide groups.

Particularly suitable non-glycidyl epoxy compound's include the following difunctional non-glycidyl epoxide compounds in which the epoxide groups form part of an alicyclic or heterocyclic ring system: bis(2,3-epoxycyclopentyl)ether, 1,2-bis(2,3-epoxycyclopentyloxy)ethane, 3,4-epoxycyclohexyl-methyl 3,4-epoxycyclohexanecarboxylate, 3,4-epoxy-6-methyl-cyclohexylmethyl 3,4-epoxy-6-methylcyclohexanecarboxylate, di(3,4-epoxycyclohexylmethyl)hexanedioate, di(3,4-epoxy-6-methylcyclohexylmethyl) hexanedioate, ethylenebis(3,4-epoxycyclohexanecarboxylate), ethanediol di(3,4-epoxycyclohexylmethyl.

Highly preferred difunctional non-glycidyl epoxies include cycloaliphatic difunctional non-glycidyl epoxies, such as 3,4-epoxycyclohexyl-methyl 3',4'-epoxycyclohexanecarboxylate and 2,2'-bis-(3,4-epoxy-cyclohexyl)-propane, with the former being most preferred.

In still another embodiment, the epoxy resin is a poly(N-glycidyl) compound or poly(S-glycidyl) compound. Poly(N-glycidyl) compounds are obtainable, for example, by dehydrochlorination of the reaction products of epichlorohydrin with amines containing at least two amine hydrogen atoms. These amines may be, for example, n-butylamine, aniline, toluidine, m-xylylenediamine, bis(4-aminophenyl)methane or bis(4-methylaminophenyl)methane. Other examples of poly(N-glycidyl) compounds include N,N'-diglycidyl derivatives of cycloalkyleneureas, such as ethyleneurea or 1,3-propyleneurea, and N,N'-diglycidyl derivatives of hydantoins, such as of 5,5-dimethylhydantoin. Examples of poly(S-glycidyl) compounds are di-S-glycidyl derivatives derived from dithiols, for example ethane-1,2-dithiol or bis(4-mercaptomethylphenyl)ether.

It is also possible to employ epoxy resins in which the 1,2-epoxide groups are attached to different heteroatoms or functional groups. Examples include the N,N,O-triglycidyl derivative of 4-aminophenol, the glycidyl ether/glycidyl ester of salicylic acid, N-glycidyl-N'-(2-glycidyloxypropyl)-5,5-dimethylhydantoin or 2-glycidyloxy-1,3-bis(5,5-dimethyl-1-glycidylhydantoin-3-yl)propane.

Other epoxide derivatives may also be employed, such as vinyl cyclohexene dioxide, limonene dioxide, limonene monoxide, vinyl cyclohexene monoxide, 3,4-epoxycyclohexlmethyl acrylate, 3,4-epoxy-6-methyl cyclohexylmethyl 9,10-epoxystearate, and 1,2-bis(2,3-epoxy-2-methylpropoxy) ethane.

Additionally, the epoxy resin may be a pre-reacted adduct of an epoxy resin, such as those mentioned above, with known hardeners for epoxy resins.

According to one embodiment, the epoxy resin may be included in the phenolic-free composition in an amount in the range of between about 10% to about 70% by weight, based on the total weight of the phenolic-free composition. In another embodiment, the epoxy resin may be included in the phenolic-free composition in an amount in the range of between about 15% to about 60% by weight, based on the total weight of the phenolic-free composition.

The phenolic-free composition also contains an acid anhydride. The acid anhydride, which imparts increased crosslink density and thermal, mechanical and toughness properties while lowering the polymerization temperature of the composition, is a modified dianhydride adduct obtained from the reaction of a flexible di- or polyamine and excess dianhydride. Examples of di- or polyamines include, but are not limited to, alkylene diamines such as ethane-1,2-diamine, propane-1,3-diamine, propane-1,2-diamine, 2,2-dimethylpropane-1,3-diamine and hexane-1,6-diamine, aliphatic diamines containing cyclic structures like 4,4'-methylenedicyclohexanamine (DACHM), 4,4'-methylenebis(2-methylcyclohexanamine) and 3-(aminomethyl)-3,5,5-trimethylcyclohexanamine (isophorone diamine (IPDA)); araliphatic diamine like m-xylylene diamine (MXDA); polyether amines, such as Jeffamine® series from Huntsman International LLC or Versalink diamine series from Air Products, amine functional polysiloxanes, such as Fluid NH 15D from Wacker Chemie, or amine functional elastomers, such as Hypro 1300X42 from Emerald Performance Materials.

According to one embodiment, the acid anhydride may be included in the phenolic-free composition in an amount in the range of between about 5% to about 80% by weight, based on the total weight of the phenolic-free composition. In another embodiment, the acid anhydride may be included in the phenolic-free composition in an amount in the range of between about 10% to about 60% by weight, based on the total weight of the phenolic-free composition.

In another embodiment, the phenolic-free composition may optionally contain one or more additives. Examples of such additives, include, but are not limited to, a toughener, catalyst, reinforcing agent, filler and mixtures thereof. According to some embodiments, it's preferred that the phenolic-free composition remain substantially free of solvent so as to avoid the potentially detrimental effects thereof.

Examples of tougheners which may be used include copolymers based on butadiene/acrylonitrile, butadiene/(meth)acrylic acid esters, butadiene/acrylonitrile/styrene graft copolymers ("ABS"), butadiene/methyl methacrylate/styrene graft copolymers ("MBS"), poly(propylene) oxides, amine-terminated butadiene/acrylonitrile copolymers ("ATBN") and hydroxyl-terminated polyether sulfones, such as PES 5003P, available commercially from Sumitomo Chemical Company or RADEL® from Solvay Advanced Polymers, LLC, core shell rubber and polymers, such as PS 1700, available commercially from Dow Chemical Company, rubber particles having a core-shell structure in an epoxy resin matrix such as MX-120 resin from Kaneka Corporation, Genioperal M23A resin from Wacker Chemie GmbH. rubber-modified epoxy resin, for instance an epoxy-terminated adduct of an epoxy resin and a diene rubber or a conjugated diene/nitrile rubber.

Examples of catalysts which may be used include amines, polyaminoamides, imidazoles, phosphines, and metal complexes of organic sulfur containing acid as described in WO 200915488

Examples of filler and reinforcing agents which may be used include silica, silica nanoparticles pre-dispersed in epoxy resins, coal tar, bitumen, textile fibres, glass fibres, asbestos fibres, boron fibres, carbon fibres, mineral silicates, mica, powdered quartz, hydrated aluminum oxide, bentonite, wollastonite, kaolin, aerogel or metal powders, for example aluminium powder or iron powder, and also pigments and dyes, such as carbon black, oxide colors and titanium dioxide, light weight microballoons, such cenospheres, glass microspheres, carbon and polymer microballoons, fire-retarding agents, thixotropic agents, flow control agents, such as silicones, waxes and stearates, which can, in part, also be used as mold release agents, adhesion promoters, antioxidants and light stabilizers, the particle size and distribution of many of which may be controlled to vary the physical properties and performance of the inventive compositions.

If present, the additive may be added to the phenolic-free composition in an amount in the range of between about 0.1% to about 30% by weight, based on the total weight of the phenolic-free composition. In further embodiments, the additive may be added to the phenolic-free composition in an amount in the range of between about 2% to about 20% by weight, preferably between about 5% to about 15% by weight, based on the total weight of the phenolic-free composition.

The phenolic-free composition according to the present disclosure may be prepared by methods known, for example, by combining the benzoxazine, epoxy resin, acid anhydride and optional additives with the aid of known mixing units such as kneaders, stirrers, rollers, in mills or in dry mixers.

It has been surprisingly found that the benzoxazine, epoxy resin and acid anhydride of the present disclosure, when combined, form a phenolic-free composition that, upon curing, produces a void free cured article ("void free" meaning no gas bubbles in the cured article) that exhibits an excellent balance of thermal, mechanical and physical properties, such as, high glass transition temperature (T_{g}), low coefficient of thermal expansion, low polymerization temperature, low viscosity, high toughness, high mechanical strength, low water absorption, and flame retardancy.

Thus, according to one particular embodiment, the phenolic-free composition, upon curing, provides an article having a glass transition temperature (as determined by dynamic mechanical analysis or "DMA") of greater then about 170°C. In other embodiments, the phenolic-free composition, upon curing, provides an article having a glass transition temperature (as determined by DMA) of greater then about 200°C, preferably greater than about 210°C, and even more preferably greater than about 220°C.

The phenolic-free composition may be cured at elevated temperature and/or pressure conditions to form cured articles. Curing can be carried out in one or two or more stages, the first curing stage being carried out at a lower temperature and the post-curing at a higher temperature(s). In one embodiment, curing may be carried out in one or more stages at a temperature within the range of about 30° - 300°C, preferably about 150° - 230°C.

As noted above, the phenolic-free composition is particular suitable for use as a coating, adhesive, sealant, and matrice for the preparation of reinforced composite material, such as prepregs and towpegs, and can also be used in injection molding or extrusion processes.

Thus, in another embodiment, the present disclosure provides an adhesive, sealant, coating or an encapsulating system for electronic or electrical components comprising the phenolic-free composition of the present disclosure. Suitable substrates on which the coating, sealant, adhesive or encapsulating system comprising the phenolic-free composition may be applied include metal, such as steel, aluminum, titanium, magnesium, brass, stainless steel, galvanized steel; silicates such as glass and quartz; metal oxides; concrete; wood; electronic chip material, such as semiconductor chip material; or polymers, such as polyimide film and polycarbonate. The adhesive, sealant or coating comprising the phenolic-free composition may be used in a variety of applications, such as in industrial or electronic applications.

In another embodiment, the present disclosure provides a cured product comprising bundles or layers of fibers infused with the phenolic-free composition.

In yet another embodiment, the present disclosure provides a method for producing a prepreg or towpreg including the steps of (a) providing a bundle or layer of fibers; (b) providing a phenolic-free composition of the present disclosure; (c) joining the bundle or layer of fibers and phenolic-free composition to form a prepreg or towpreg assembly; (d) optionally removing excess phenolic-free composition from the prepreg or towpreg assembly, and (e) exposing the prepreg or towpreg assembly to elevated temperature and/or pressure conditions sufficient to infuse the bundle or layer of fibers with the phenolic-free composition and form a prepreg or towpreg.

In some embodiments, the bundle or layer of fibers may be constructed from unidirectional fibers, woven fibers, chopped fibers, non-woven fibers or long, discontinuous fibers. The fibers may be selected from glass, such as S glass, S2 glass, E glass, R glass, A glass, AR glass, C glass, D glass, ECR glass, glass filament, staple glass, T glass and zirconium glass, carbon, polyacrylonitrile, acrylic, aramid, boron, polyalkylene, quartz, polybenzimidazole, polyetherketone, polyphenylene sulfide, poly p-phenylene benzobisoxazole, silicon carbide, phenolformaldehyde, phthalate and naphthenoate.

The phenolic-free composition (and prepregs or towpregs prepared therefrom) are particularly useful in the manufacture and assembly of composite parts for aerospace and automotive applications, bonding of composite and metal parts, core and core-fill for sandwich structures and composite surfacing.

### EXAMPLES

### Example 1A. Preparation of modified dianhydride adduct from the reaction of a flexible polyamine and excess dianhydride.

Into a four-neck flask equipped with a mechanical stirrer and a reflux condenser were charged 50 parts weight of bisphenol A dianhydride (BPADA) and 300 parts by weight of MEK. The flask containing the mixed solution was then heated to a temperature of about 70°C causing all of the BPDA to dissolve. The temperature was then further increased in order to distil out MEK. During this time, 100 parts by weight of Jeffamine® D-2000 polyetheramine was gradually added to the solution. Once all of the MEK had been removed, the solution was further heated to a temperature of about 170°C and the solution was maintained at this temperature under full vacuum for approximately 1 hour to produce a highly viscous liquid modified dianhydride adduct.

### Example 1B. Preparation of modified dianhydride adduct from the reaction of a flexible polyamine and excess dianhydride.

Into a four-neck flask equipped with a mechanical stirrer and a reflux condenser were charged 50 parts weight bisphenol A dianhydride (BPADA) and 250 part of MEK. The flask containing the mixed solution was then heated to a temperature of about 70°C causing all of the BPDA to dissolve. The temperature was then further increased in order to distil out MEK. During this time, 150 parts by weight of Jeffamine® D-2000 polyetheramine was gradually added to the solution. Once all of the MEK had been removed, the solution was further heated to a temperature of about 180°C and the solution was maintained at this temperature under full vacuum for approximately 1 hour to produce a highly viscous modified dianhydride adduct.

### Example 2.

About 70 parts weight of BPA benzoxazine and 30 parts by weight of CY179 epoxy resin were mixed at a temperature of about 110°C until a homogeneous clear mixture was formed. 12 parts by weight of the modified dianhydride adducts prepared in Examples 1A and 1B and 24 parts by weight of the modified dianhydride adduct prepared in Example 1B were added to the mixtures. The mixtures were then cured to form clear void-free articles. Related thermal and mechanical properties are shown below in Table 1:

**Table 1. Properties of phenolic-free compositions**

| Pheolic- Free Composition | | Comparative | A | B | c |
|---|---|---|---|---|---|
| BPA benzoxazine | | 70 | 70 | 70 | 70 |
| CY179 | | 30 | 30 | 30 | 30 |
| Dianhydride Adduct #1 | | | 12 | | |
| Dianhydride Adduct #2 | | | | 12 | 24 |
| Curing conditions | | 180°C 2h + 200°C 2h +220°C 2h | | | |
| Transparency of cured resin | | Yes | No | Yes | Yes |
| Tensile Modulus(Gpa) | | 4.2 | 3.2 | 3.3 | 2.7 |
| Tensile Strength(Mpa) | | 35 | 57 | 58 | 46 |
| Elongation % | | 0.9 | 2 | 2 | 2 |
| Flexural Modulus (Gpa) | | 4.3 | 3.3 | 3.6 | 2.9 |
| Flexural Strength (Mpa) | | 80 | 122 | 140 | 103 |
| Elongation € % | | 1.7 | 3.8 | 4.4 | 3.9 |
| K1C (Mpa M^{0.5}) | | 0.53 | 0.71 | 0.82 | 0.74 |
| G1C (J/m²) | | 77 | 158 | 203 | 225 |
| T_{g} by DMA (°C) | E' | 203 | 216 | 221 | 233 |
| | E" | 221 | 230 | 230 | 242 |
| | Tan Delta | 243 | 247 | 245 | 260 |

As shown in Table 1, the ternary phenolic-free compositions, upon curing, provide a cured article having a significant increase in both glass transition temperature and toughness. This is very unusual and was not expected for such high temperature thermoset systems.

### Example 3.

About 50 parts weight of cresol benzoxazine, 40 parts by weight of ARALDITE® EPN 1138 epoxy resin, and 20 parts by weight of maleic anhydride were mixed together at a temperature of about 80°C until a homogeneous clear mixture was formed. The mixture was then cured for 2 hours at temperatures of 180°C, 200°C and 220°C, after which a clear void free article was obtained having a glass transition temperature of 159°C based on DSC analysis.

### Comparative Example 4.

About 100 parts weight of BPA benzoxazine were heated to melt state at a temperature of about 120°C. About 25 parts by weight of pre-grinded fine powder BPADA was then added under high shearing. Minor amounts of BPADA were observed to be soluble in the mixture. The mixture was then further heated at a temperature of about 140°C, with most of the BPADA still remaining un-dissolved. The temperature was then further increased to 180°C to cure the mixture but significant foaming occurred.

### Comparative Example 5.

About 21 parts weight of weight of BPA benzoxazine were mixed with 9 parts by weight of maleic anhydride at a temperature of about 110°C until a homogeneous clear mixture was formed. The temperature was then increased to about 180°C to cure the mixture but significant foaming occurred.

### Comparative Example 6

About 70 parts weight of BPA benzoxazine were mixed with 30 parts by weight of nadic methyl anhydride at a temperature of about 110°C until a homogeneous clear mixture was formed. The temperature was then increased to about 180°C to cure the mixture but significant foaming occurred.

## Claims

1. A composition containing less than 1% by weight of phenolic resin or phenolic compound, relative to the total weight of the composition, comprising:
(a) 10% to 75% by weight of a benzoxazine;
(b) 10% to 70% by weight of an epoxy resin; and
(c) 5% to 80% by weight of an acid anhydride which is a modified dianhydride adduct obtained from the reaction of a flexible di- or polyamine selected from alkylene diamines such as ethane-1,2-diamine, propane-1,3-diamine, propane-1,2-diamine, 2,2-dimethylpropane-1,3-diamine and hexane-1,6-diamine; aliphatic diamines containing cyclic structures like 4,4'-methylenedicyclohexanamine (DACHM), 4,4'-methylenebis(2-methylcyclohexanamine) and 3-(aminomethyl)-3,5,5-trimethylcyclohexanamine (isophorone diamine (IPDA)); araliphatic diamines like m-xylylene diamine (MXDA); polyether amines; amine functional polysiloxanes; or amine functional elastomers, and excess dianhydride;
wherein the percent by weights are based on the total weight of the composition.

2. The composition of claim 1, wherein the benzoxazine is a compound of the formula 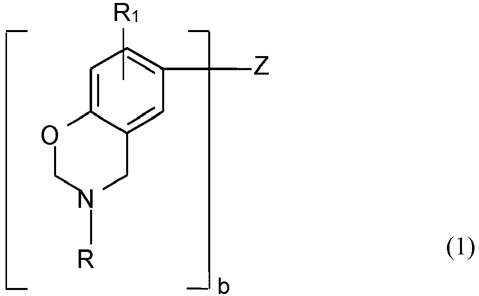 where b is an integer from 1 to 4; each R is independently hydrogen, a substituted or unsubstituted C₁ - C₂₀ alkyl group, a substituted or unsubstituted C₂ - C₂₀ alkenyl group, a substituted or unsubstituted C₆ - C₂₀ aryl group, a substituted or unsubstituted C₂ - C₂₀ heteroaryl group, a substituted or unsubstituted C₄ - C₂₀ carbocyclic group, a substituted or unsubstituted C₂ - C₂₀ heterocyclic group, or a C₃-C₈ cycloalkyl group; each R₁ is independently hydrogen, a C₁ - C₂₀ alkyl group, a C₂ - C₂₀ alkenyl group, or a C₆ - C₂₀ aryl group; and Z is a direct bond (when b=2), a substituted or unsubstituted C₁ - C₂₀ alkyl group, a substituted or unsubstituted C₆ - C₂₀ aryl group, a substituted or unsubstituted C₂ - C₂₀ heteroaryl group, O, S, S=O, O=S=O or C=O.

3. The composition of claim 2 wherein the benzoxazine is a compound of the formula: 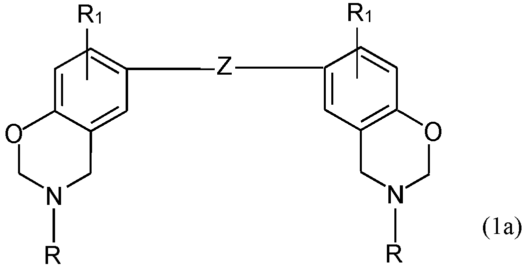 where Z is selected from a direct bond, CH₂, C(CH₃)₂, C=O, O, S, S=O, O=S=O and 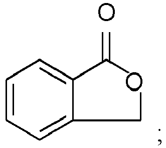 each R is independently hydrogen, a C₁ - C₂₀ alkyl group, an allyl group, or a C₆ - C₁₄ aryl group; and R₁ is independently hydrogen, a C₁ - C₂₀ alkyl group, a C₂ - C₂₀ alkenyl group, or a C₆ - C₂₀ aryl group.

4. The composition of claim 1 wherein the benzoxazine is a compound of the formula 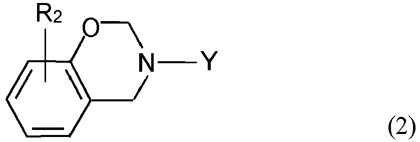 where Y is a C₁ - C₂₀ alkyl group, a C₂ - C₂₀ alkenyl group, or substituted or unsubstituted phenyl; and each R₂ is independently hydrogen, halogen, a C₁ - C₂₀ alkyl group, or a C₂ - C₂₀ alkenyl group.

5. The composition of claim 1 wherein the benzoxazine is a compound of the formula 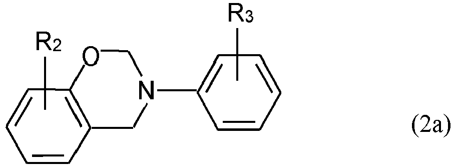 where each R₂ is independently a C₁ - C₂₀ alkyl or C₂ - C₂₀ alkenyl group, each of which being optionally substituted or interrupted by one or more O, N, S, C=O, COO and NHC=O, and a C₆ - C₂₀ aryl group; and each R₃ is independently hydrogen, a C₁ - C₂₀ alkyl or C₂ - C₂₀ alkenyl group, each of which being optionally substituted or interrupted by one or more O, N, S, C=O, COOH and NHC=O or a C₆ - C₂₀ aryl group.

6. The composition of claim 1 wherein the epoxy resin is selected from a polyglycidyl epoxy compound; a non-glycidyl epoxy compound; an epoxy cresol novolac compound; an epoxy phenol novolac compound and mixtures thereof.

7. A cured article comprising the composition of claim 1.

8. Use of the composition of claim 1 as an adhesive, sealant, coating or an encapsulating system for electronic or electrical components.

9. A cured article comprising bundles or layers of fibers infused with the composition of claim 1.

10. A method for producing a prepreg or towpreg comprising the steps of (a) providing a bundle or layer of fibers; (b) providing a composition of claim 1; (c) joining the bundle or layer of fibers and composition to form a prepreg or towpreg assembly; (d) optionally removing excess composition from the prepreg or towpreg assembly, and (e) exposing the prepreg or towpreg assembly to elevated temperature and/or pressure conditions sufficient to infuse the bundle or layer of fibers with the composition and form a prepreg or towpreg.

## Patentansprüche

1. Zusammensetzung, die weniger als 1 Gewichts-% Phenolharz oder Phenolverbindung enthält, relativ zum Gesamtgewicht der Zusammensetzung, umfassend:
(a) 10 bis 75 Gewichts-% eines Benzoxazins;
(b) 10 bis 70 Gewichts-% eines Epoxidharzes; und
(c) 5 bis 80 Gewichts-% eines Säureanhydrids, das ein modifiziertes Dianhydrid-Addukt ist, erhalten aus der Reaktion eines flexiblen Di- oder Polyamins, ausgewählt aus Alkylendiaminen, wie etwa Ethan-1,2-diamin, Propan-1,3-diamin, Propan-1,2-diamin, 2,2-Dimethylpropan-1,3-diamin und Hexan-1,6-diamin; aliphatischen Diaminen, die cyclische Strukturen enthalten, wie 4,4'-Methylendicyclohexanamin (DACHM), 4,4'-Methylenbis(2-methylcyclohexanamin) und 3-(Aminomethyl)-3,5,5-trimethylcyclohexanamin (Isophorondiamin (IPDA)); araliphatischen Diaminen, wie m-Xylylendiamin (MXDA); Polyetheraminen; aminfunktionellen Polysiloxanen; oder aminfunktionellen Elastomeren, und überschüssigen Dianhydrids;
wobei die Gewichtsprozente auf das Gesamtgewicht der Zusammensetzung bezogen sind.

2. Zusammensetzung nach Anspruch 1, wobei das Benzoxazin eine Verbindung der Formel 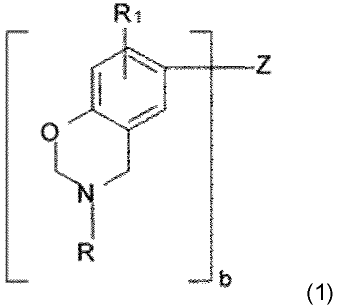 ist, wobei b eine ganze Zahl von 1 bis 4 ist; jedes R unabhängig Wasserstoff, eine substituierte oder unsubstituierte C₁-C₂₀-Alkylgruppe, eine substituierte oder unsubstituierte C₂-C₂₀-Alkenylgruppe, eine substituierte oder unsubstituierte C₆-C₂₀-Arylgruppe, eine substituierte oder unsubstituierte C₂-C₂₀-Heteroarylguppe, eine substituierte oder unsubstituierte C₄-C₂₀-Carbocyclogruppe, eine substituierte oder unsubstituierte C₂-C₂₀-Heterocyclogruppe oder eine C₃-C₈-Cycloaklygruppe ist; jedes R¹ unabhängig Wasserstoff, eine C₁-C₂₀-Alkylgruppe, eine C₂-C₂₀-Alkenylgruppe oder eine C₆-C₂₀-Arylgruppe ist; und Z eine direkte Bindung (wenn b = 2), eine substituierte oder unsubstituierte C₁-C₂₀-Alkylgruppe, eine substituierte oder unsubstituierte C₆-C₂₀-Arylgruppe, eine substituierte oder unsubstituierte C₂-C₂₀-Heteroarylgruppe, O, S, S=O, O=S=O oder C=O ist.

3. Zusammensetzung nach Anspruch 2, wobei das Benzoxazin eine Verbindung der Formel: 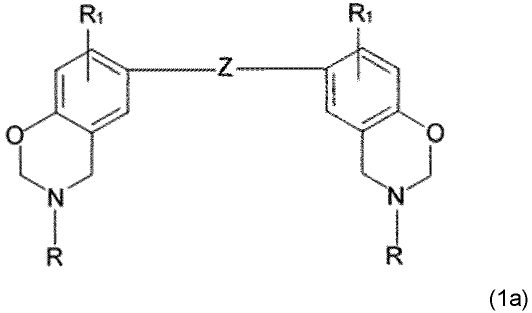 ist, wobei Z ausgewählt ist aus einer direkten Bindung, CH₂, C(CH₃)₂, C=O, O, S, S=O, OS=O und 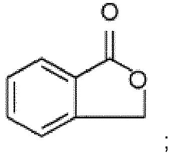 jedes R unabhängig Wasserstoff, eine C₁-C₂₀-Alkylgruppe, eine Allylgruppe oder eine C₆-C₁₄-Arylgruppe ist; und R¹ unabhängig Wasserstoff, eine C₁-C₂₀-Alkylgruppe, eine C₂-C₂₀-Akenylgruppe oder eine C₆-C₂₀-Arylgruppe ist.

4. Zusammensetzung nach Anspruch 1, wobei das Benzoxazin eine Verbindung der Formel 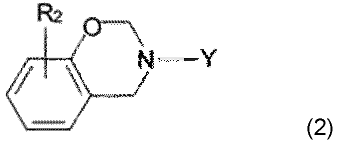 ist, wobei Y eine C₁-C₂₀-Alkylgruppe, eine C₂-C₂₀-Alkenylgruppe oder substituiertes oder unsubstituiertes Phenyl ist; und jedes R₂ unabhängig Wasserstoff, Halogen, eine C₁-C₂₀-Alkylgruppe oder eine C₂-C₂₀-Alkenylgruppe ist.

5. Zusammensetzung nach Anspruch 1, wobei das Benzoxazin eine Verbindung der Formel 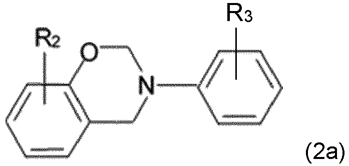 ist, wobei jedes R₂ unabhängig eine C₁-C₂₀-Alkyl- oder C₂-C₂₀-Alkenylgruppe ist, jeweils fakultativ substituiert oder unterbrochen durch ein oder mehrere O, N, S, C=O, COO und NHC=O, und eine C₆-C₂₀-Arylgruppe; und jedes R₃ unabhängig Wasserstoff, eine C₁-C₂₀-Alkyl- oder C₂-C₂₀-Alkenylgruppe ist, jeweils fakultativ substituiert oder unterbrochen von einem oder mehreren O, N, S, C=O, COOH oder NHC=O, oder eine C₆-C₂₀-Arylgruppe.

6. Zusammensetzung nach Anspruch 1, wobei das Epoxidharz ausgewählt ist aus einer Polyglycidylepoxidverbindung; einer Nicht-Glycidylepoxidverbindung; einer Epoxid-Kresol-Novolak-Verbindung; einer Epoxid-Phenol-Novolak-Verbindung und Mischungen davon.

7. Ausgehärteter Artikel, umfassend die Zusammensetzung nach Anspruch 1.

8. Verwendung der Zusammensetzung nach Anspruch 1 als ein Klebstoff, Dichtungsmittel, Beschichtung oder ein Einkapselungssystem für elektronische oder elektrische Komponenten.

9. Ausgehärteter Artikel, umfassend Bündel oder Schichten aus Fasern, infundiert mit der Zusammensetzung nach Anspruch 1.

10. Verfahren zur Herstellung eines Prepregs oder Towpregs, umfassend die Schritte (a) Bereitstellen eines Bündels oder einer Schicht aus Fasern; (b) Bereitstellen einer Zusammensetzung nach Anspruch 1; (c) Zusammenbringen des Bündels oder der Schicht aus Fasern und der Zusammensetzung, um eine Prepreg- oder Towpreg-Anordnung zu bilden; (d) fakultativ Entfernen überschüssiger Zusammensetzung aus der Prepreg- oder Towpreg-Anordnung und (e) Unterwerfen der Prepreg- oder Towpreg-Anordnung unter erhöhte Temperatur- und/oder Druckbedingungen, die ausreichend sind, um das Bündel oder die Schicht aus Fasern mit der Zusammensetzung zu infundieren und ein Prepreg oder Towpreg zu bilden.

## Revendications

1. Composition contenant moins de 1 % en poids d'une résine phénolique ou d'un composé phénolique, par rapport au poids total de la composition, comprenant :
(a) de 10 % à 75 % en poids d'une benzoxazine ;
(b) de 10 % à 70 % en poids d'une résine époxy, et
(c) de 5 à 80 % en poids d'acide anhydride, lequel est un adduit de dianhydride modifié obtenu à partir de la réaction entre une diamine ou une polyamine flexible sélectionnée parmi des alkylène diamines telles que éthane-1,2-diamine, propane-1,3-diamine, propane-1,2-diamine, 2,2-diméthylpropane-1,3-diamine, et hexane-1,6-diamine ; des diamines aliphatiques contenant des structures cycliques comme 4,4'-méthylènedicyclohexanamine (DACHM), 4,4'-méthylènebis(2-méthylcyclohexanamine) et 3-(aminométhyl)-3,5,5-triméthylcyclohexanamine (isophorone diamine (IPDA)) ; des diamines araliphatiques comme m-xylylène diamine (MXDA) ; des polyéther amines ; des polysiloxanes à fonction amine, ou des élastomères à fonction amine, et un excès de dianhydride ;
dans laquelle les pourcentages en poids reposent sur le poids total de la composition.

2. Composition selon la revendication 1, dans laquelle la benzoxazine est un composé de la formule : 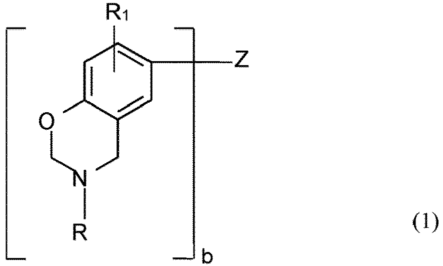 où b est un entier allant de 1 à 4 ; chaque R est indépendamment hydrogène, un groupe alkyle substitué ou non substitué en C₁-C₂₀, un groupe alcényle substitué ou non substitué en C₂-C₂₀, un groupe aryle substitué ou non substitué en C₆-C₂₀, un groupe hétéroaryle substitué ou non substitué en C₂-C₂₀, un groupe carbocyclique substitué ou non substitué en C₄-C₂₀, un groupe hétérocyclique substitué ou non substitué en C₂-C₂₀, ou un groupe cycloalkyle en C₃-C₈ ; chaque R₁ est indépendamment hydrogène, un groupe alkyle en C₁-C₂₀, un groupe alcényle en C₂-C₂₀, ou un groupe aryle en C₆-C₂₀, et Z est une liaison directe (lorsque b=2), un groupe alkyle substitué ou non substitué en C₁-C₂₀, un groupe aryle substitué ou non substitué en C₆-C₂₀, un groupe hétéroaryle substitué ou non substitué en C₂-C₂₀, O, S, S=O, O=S=O, ou C=O.

3. Composition selon la revendication 2, dans laquelle la benzoxazine est un composé de la formule : 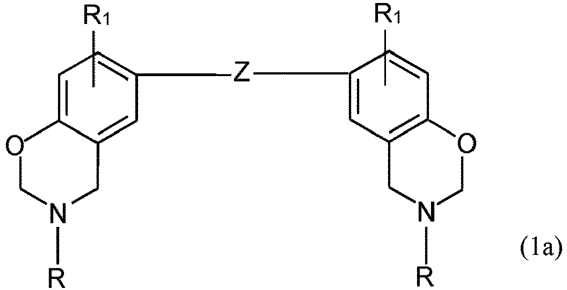 où Z est sélectionné parmi une liaison directe, CH₂, C(CH₃)₂, C=O, O, S, S=O, O=S=O, et 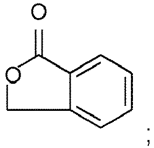 chaque R est indépendamment hydrogène, un groupe alkyle en C₁-C₂₀, un groupe allyle, ou un groupe aryle en C₆-C₁₄, et R₁ est indépendamment hydrogène, un groupe alkyle en C₁-C₂₀, un groupe alcényle en C₂-C₂₀, ou un groupe aryle en C₆-C₂₀.

4. Composition selon la revendication 1, dans laquelle la benzoxazine est un composé de la formule : 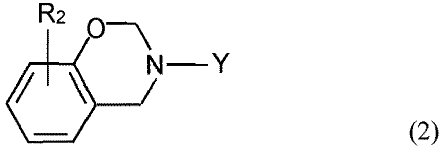 où Y est un groupe alkyle en C₁-C₂₀, un groupe alcényle en C₂-C₂₀, un groupe phényle substitué ou non substitué, et R₂ est indépendamment hydrogène, halogène, un groupe alkyle en C₁-C₂₀, ou un groupe alcényle en C₂-C₂₀.

5. Composition selon la revendication 1, dans laquelle la benzoxazine est un composé de la formule : 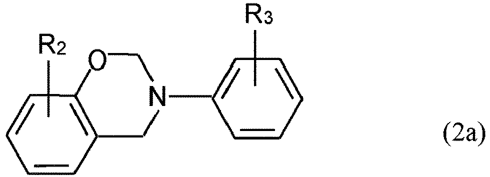 où chaque R₂ est indépendamment un alkyle en C₁-C₂₀ ou un alcényle en C₂-C₂₀, chacun étant facultativement substitué ou interrompu par un ou plusieurs éléments parmi O, N, S, C=O, COO et NHC=O, et un groupe aryle en C₆-C₂₀, et chaque R₃ est indépendamment hydrogène, un groupe alkyle en C₁-C₂₀ ou alcényle en C₂-C₂₀, chacun étant facultativement substitué ou interrompu par un ou plusieurs éléments parmi O, N, S, C=O, COOH, et NHC=O, ou un groupe aryle en C₆-C₂₀.

6. Composition selon la revendication 1, dans laquelle la résine époxy est sélectionnée parmi un composé époxy polyglycidylique ; un composé époxy non polyglycidylique, un composé époxy crésol novolaque, un composé époxy phénolique novolaque, et des mélanges de ceux-ci.

7. Article durci comprenant la composition selon la revendication 1.

8. Utilisation de la composition selon la revendication 1 comme adhésif, matériau d'étanchéité, revêtement ou comme système d'encapsulation pour des composants électroniques ou électriques.

9. Article durci comprenant des faisceaux ou couches de fibres imprégnées avec la composition selon la revendication 1.

10. Procédé pour produire un préimprégné ou une mèche préimprégnée, comprenant les étapes pour (a) fournir un faisceau ou une couche de fibres ; (b) fournir une composition selon la revendication 1 ; (c) joindre le faisceau ou la couche de fibres et la composition afin de former un ensemble de préimprégné ou de mèche préimprégnée ; (d) facultativement, éliminer la composition en excès de l'ensemble de préimprégné ou de mèche préimprégnée, et (e) exposer l'ensemble de préimprégné ou de mèche préimprégnée à des conditions de température et pression élevées suffisant pour imprégner le faisceau ou la couche de fibres avec la composition, et former un préimprégné ou une mèche préimprégnée.
